# FASCICULE DE BREVET EUROPEEN

(11) **EP 0 511 491 B1**
(45) Date de publication et mention de la délivrance du brevet: **13.11.1996**
(21) Numéro de dépôt: 92105037.3
(22) Date de dépôt: 24.03.1992
(51) Int. Cl.: H01M 2/16, H01M 10/40

(54) **Générateur électrochimique secondaire au lithium et à électrolyte organique liquide**
Lithium Akkumulator mir flüssigem organischem Elektrolyt
Secondary lithium battery with liquid organic electrolyte

(30) Priorité: 29.03.1991 FR 9103877
(43) Date de publication de la demande: 04.11.1992
(73) Titulaire: ALCATEL ALSTHOM COMPAGNIE GENERALE D'ELECTRICITE, F-75382 Paris Cédex 08 (FR)
(72) Inventeur: Andrieu, Xavier, F-91220 Bretigny sur Orge (FR)
(74) Mandataire: Weinmiller, Jürgen

(56) Documents cités:
- EP-A- 0 195 684
- US-A- 4 812 375

## Description

La présente invention concerne un générateur électrochimique secondaire au lithium et à électrolyte organique liquide, de type cylindrique ou prismatique.

On sait que la durée de vie d'un tel générateur est limitée par le faible rendement en cyclage du lithium et par l'apparition de dendrites au moment de la recharge. Il faut dans la pratique utiliser trois à cinq fois plus de lithium que la quantité théoriquement nécessaire. Les dendrites, qui peuvent provoquer des courts-circuits internes, sont la principale cause de défaillance de ce type de générateur. Ces courts-circuits induisent des échauffements localisés qui, en présence du métal alcalin finement divisé et de l'électrolyte organique, peuvent avoir comme conséquence une explosion de la batterie.

On a déjà proposé d'utiliser un électrolyte de composition optimisée (solvant, soluté, additifs) pour améliorer la cyclabilité du générateur et limiter les effets de la croissance dendritique.

Il est également connu de remplacer le lithium pur par des alliages (tels que LiAI, LiB, LiSi...) pour améliorer la réversibilité de l'électrode négative.

Toutes les dispositions précédentes n'apportent que des résultats insuffisants.

D'après les articles paru dans :
- Powers 1990 Lithium Battery Report
- Journal of Power Sources 34 (1991) 31-38,
il a été montré que l'augmentation de la pression exercée sur l'anode permet un accroissement important de la durée de vie du générateur.
Cette pression est réalisée par des moyens mécaniques au moment du montage. Ainsi dans un générateur cylindrique à électrodes enroulées on réalise un spiralage serré.

La demande de brevet européen EP-A-195 684 propose d'appliquer sur l'électrode de lithium un film susceptible de gonfler dans l'électrolyte.

La présente invention a pour but de proposer des moyens de compression plus aisés à mettre en oeuvre que les moyens mécaniques précédents, et acceptant au cours du fonctionnement du générateur des variations dimensionnelles plus importantes.

La présente invention a pour objet un générateur électrochimique secondaire au lithium à électrolyte organique liquide, de type cylindrique ou prismatique, comportant au moins une électrode au lithium, un film microporeux en polyoléfine et une électrode positive avec un espace interélectrodes prédéterminé, carctérisé par le fait qu'il comprend un séparateur supplémentaire situé du côté de ladite électrode positive et constitué d'un film en polymère réticulé, choisi parmi les polymères conducteurs ioniques réticulés et les élastomères, tels que le polybutadiène, le polyisoprène et les élastomères fluorés, ledit polymère réticulé étant susceptible de gonfler dans ledit électrolyte de manière à exercer une compression sur les électrodes.

L'invention s'applique en particulier à un générateur cylindrique à électrodes spiralées.

Selon un mode de réalisation avantageux, une trame minérale ou organique, tissée ou non, est incorporée audit polymère réticulé pour favoriser le gonflement perpendiculairement aux électrodes.

Ledit séparateur peut être disposé également dans le générateur, à l'extérieur du bloc formé par les électrodes, pour servir de réserve d'électrolyte en remplacement des feutres habituellement utilisés.

Le gonflement du polymère est donc effectué in situ ; il est suffisant pour assurer une bonne conductivité ionique et une compression des électrodes.

Ledit polymère conducteur ionique réticulé gonflable peut comporter par exemple un polyéther à deux fonctions amines terminales, réticulées par un composé durcisseur comportant deux fonctions époxy.

Ledit polyéther peut être choisi parmi un polyéthylène oxyde, un polypropylène oxyde, un copolymère statistique des deux précédents, alterné, séquencé ou greffé de polyéthers. Sa masse moléculaire est comprise entre 300 et 100 000.

Le composé durcisseur peut être de type diglycidyl, une résine polyépoxyde, ou un polyéther à deux fonctions époxy terminales. De préférence la proportion de ce composé durcisseur est choisie de façon que le rapport époxy/amine soit compris entre 0,5 et 5.

Les fonctions amines du polyéther réagissent avec les groupements époxy qui s'ouvrent. Les fonctions amines secondaires formées peuvent réagir à leur tour avec des époxy. Cet ensemble de réactions assure la formation d'un réseau tridimensionnel et la réticulation. La taille minimale du réseau réticulé est fixée par la longueur de chaîne de la résine polyéther utilisée.

Ledit polymère réticulé gonflable peut comporter en outre un plastifiant non réactif compatible avec le polyéther, présentant une forte constante diélectrique et une faible tension de vapeur. Il peut être un solvant aprotique dipolaire (carbonate de propylène, carbonate d'éthylène, g-butyrolactone,...), un glyme (tétraglyme, hexaglyme,...), ou un diméthyléther de glycol (polyéthylèneglycol diméthyléther...). Il peut être aussi un mélange de plusieurs solvants. Le polymère réticulé peut comprendre jusqu'à 80% de solvant.

La réticulation du polyéther se fait en présence du plastifiant et peut être initiée thermiquement.

D'autres caractéristiques et avantages de la présente invention apparaîtront au cours de la description suivante de modes de réalisation donnés à titre illustratif mais nullement limitatif. On prépare tout d'abord les polymères réticulés gonflables suivants :

### Exemple 1

On dissout dans 10 cm³ d'acétonitrile à 25°C :
- 0,5 g de polyoxyéthylène (5000) bis(amine) de la Société Aldrich
- 10 µl d'éthylène glycol diglycidyléther comme durcisseur.

Après dissolution complète, le mélange est coulé dans un moule, puis le solvant est évaporé sous vide. Le film obtenu est réticulé 4 heures à 100°C et séché à la même température 15 heures sous vide primaire.

### Exemple 2

On réalise suivant la procédure de l'exemple 1 un polymère contenant :
- 2 g de 0,0' -bis-(2-aminopropyl)-polyéthylène glycol 1900 vendu sous la marque Jeffamine ED2001 de Texaco
- 1 g de résine polyépoxyde vendu sous la marque AW106 de Ciba Geigy.

### Exemple 3

On réalise suivant la procédure de l'exemple 1 un électrolyte contenant :
- 1,5 g de 0,0'-bis-(2-aminopropyl)-polyéthylène glycol 1900 vendu sous la marque Jeffamine ED2001 de Texaco
- 0,3 g d'éthylène glycol diglycidyléther comme durcisseur
- 2,6 g de carbonate de propylène comme plastifiant non réactif.

Un film de 200 µm d'un des exemples précédents est juxtaposé à un film de polypropylène microporeux de type Celgard 2500, et d'épaisseur 50 µm.

Cet ensemble constitue le séparateur utilisé dans un générateur rechargeable de type Li/V₂O₅ cylindrique.

L'électrode négative est une feuille de lithium et l'électrode positive est un déployé d'aluminium enduit de poudres de V₂O₅ et de noir de carbone (dans une proportion de 10% en poids), liées de manière classique par un polymère fluoré.

Le film de polypropylène microporeux est en contact avec le lithium, tandis que le film en polymère réticulé gonflable est en contact avec l'électrode positive.

Les électrodes, collecteurs de courant et séparateurs, sont bobinés autour d'un mandrin ; l'espace interélectrodes est prédéterminé et maintenu par des moyens mécaniques appropriés. Lorsque cette opération est terminée, l'ensemble est trempé dans une solution de carbonate de propylène/diméthoxy éthane (en proportions égales) contenant du perchlorate de lithium 1M. Après imprégnation des électrodes et gonflement du polymère, l'accumulateur est introduit dans son bottier cylindrique.

Selon une variante, l'ensemble bobiné est introduit dans le bottier cylindrique puis imprégné d'électrolyte.

Dans les deux cas le gonflement du film en polymère exerce une compression importante sur les électrodes.

Bien entendu l'invention n'est pas limitée aux modes de réalisation qui viennent d'être décrits. Les générateurs selon l'invention peuvent comporter les divers types d'anodes, cathodes et d'électrolytes liquides habituellement utilisés ; ils peuvent être prismatiques.

## Revendications

1. Générateur électrochimique secondaire à électrolyte organique liquide, comportant au moins une électrode au lithium, un film microporeux en polyoléfine et une électrode positive, caractérisé par le fait qu'il comprend un séparateur supplémentaire situé du côté de ladite électrode positive et constitué d'un film en polymère réticulé, choisi parmi les polymères conducteurs ioniques réticulés et les élastomères, tels que le polybutadiène, le polyisoprène et les élastomères fluorés, ledit polymère réticulé étant susceptible de gonfler dans ledit électrolyte de manière à exercer une compression sur les électrodes.

2. Générateur électrochimique selon la revendication 1, caractérisé par le fait qu'une trame minérale ou organique, tissée ou non, est incorporée dans ledit film en polymère réticulé.

3. Générateur selon la revendication 1, caractérisé par le fait que lesdits polymères conducteurs ioniques réticulés comportent un polyéther à deux fonctions amines terminales, réticulées par un composé durcisseur comportant deux fonctions époxy.

4. Générateur selon la revendication 3, caractérisé par le fait que ledit polyéther est choisi parmi un polyéthylène oxyde, un polypropylène oxyde, un copolymère statistique des deux précédents, alterné, séquencé ou greffé de polyéthers.

5. Générateur selon la revendication 4, caractérisé par le fait que la masse moléculaire dudit polyéther est comprise entre 300 et 100 000.

6. Générateur selon l'une des revendications 3 à 5, caractérisé par le fait que la proportion dudit composé durcisseur est choisie de façon que le rapport époxy/amine soit compris entre 0,5 et 5.

7. Générateur selon l'une des revendications 3 à 6, caractérisé par le fait que ledit composé durcisseur est de type diglycidyl.

8. Générateur selon l'une des revendications 3 à 6, caractérisé par le fait que ledit composé durcisseur est une résine polyépoxyde.

9. Générateur selon l'une des revendications 3 à 6, caractérisé par le fait que ledit composé durcisseur est un polyéther à deux fonctions époxy terminales.

10. Générateur selon l'une des revendications 4 à 9, caractérisé par le fait que ledit film en polymère réticulé comporte un plastifiant non réactif, choisi parmi les solvants aprotiques dipolaires à faible tension de vapeur, les glymes, les diméthyl éthers de glycol et leurs mélanges.

## Patentansprüche

1. Sekundärer elektrochemischer Generator mit flüssigem organischem Elektrolyten, der mindestens eine Lithiumelektrode, einen mikroporösen Film aus Polyolefin und eine positive Elektrode aufweist, dadurch gekennzeichnet, daß er einen zusätzlichen Separator aufweist, der sich auf der Seite der positiven Elektrode befindet und aus einem Film aus vernetztem Polymer besteht, das unter den vernetzten ionenleitenden Polymeren und den Elastomeren wie Polybutadien, Polyisopren und den fluorierten Elastomeren ausgewählt wird, wobei das vernetzte Polymer im Elektrolyten so anschwellen kann, daß es eine Kompressionskraft auf die Elektroden ausübt.

2. Elektrochemischer Generator nach Anspruch 1, dadurch gekennzeichnet, daß ein mineralischer oder organischer, gewebter oder ungewebter Schußfaden in das vernetzte Polymer eingefügt wird.

3. Elektrochemischer Generator nach Anspruch 1, dadurch gekennzeichnet, daß die vernetzten, ionenleitenden Polymere ein Polyäther mit zwei terminalen Aminfunktionen enthalten, die von einem Härter vernetzt werden, der zwei Epoxyfunktionen aufweist.

4. Elektrochemischer Generator nach Anspruch 3, dadurch gekennzeichnet, daß das Polyäther aus einem Polyäthylenoxid, einem Polypropylenoxid, einem statistischen Copolymer der beiden vorhergehenden Polyäther ausgewählt wird, das wechselnd, sequenziert oder mit Polyäthern veredelt ist.

5. Elektrochemischer Generator nach Anspruch 4, dadurch gekennzeichnet, daß die Molekularmasse des Polyäthers zwischen 300 und 100 000 liegt.

6. Elektrochemischer Generator nach einem der Ansprüche 3 bis 5, dadurch gekennzeichnet, daß der Härteranteil so gewählt wird, daß das Verhältnis Epoxy/Amin zwischen 0,5 und 5 liegt.

7. Elektrochemischer Generator nach einem der Ansprüche 3 bis 6, dadurch gekennzeichnet, daß der Härter ein Diglycidyl ist.

8. Elektrochemischer Generator nach einem der Ansprüche 3 bis 6, dadurch gekennzeichnet, daß der Härter ein Polyepoxydharz ist.

9. Elektrochemischer Generator nach einem der Ansprüche 3 bis 6, dadurch gekennzeichnet, daß der Härter ein Polyäther mit zwei terminalen Epoxyfunktionen ist.

10. Elektrochemischer Generator nach einem der Ansprüche 4 bis 9, dadurch gekennzeichnet, daß der Film aus vernetztem Polymer einen nicht-reaktiven Weichmacher aufweist, der aus den bipolaren aprotischen Lösungsmitteln mit geringer Dampfspannung, den Glymen, den Dimethylglykoläthern und ihren Mischungen ausgewählt wird.

## Claims

1. An electrochemical secondary cell having a liquid organic electrolyte, including at least one lithium electrode, a microporous film of polyolefin, and a positive electrode, the cell being characterized by the fact that it includes an additional separator situated adjacent to said positive electrode and constituted by a film of cross-linked polymer selected from cross-linked ion-conducting polymers and elastomers such as polybutadine, polyisoprene, and fluorine-containing elastomers, said cross-linked polymer being capable of swelling in said electrolyte so as to exert pressure on the electrodes.

2. An electrochemical cell according to claim 1, characterized by the fact that woven or non-woven organic or inorganic cloth is incorporated in said cross-linked polymer film.

3. A cell according to claim 1, characterized by the fact that said cross-linked ion conducting polymers include a polyether having two terminal amine functions cross-linked by a curing compound including two epoxy functions.

4. A cell according to claim 3, characterized by the fact that said polyether is selected from a polyethylene oxide, a polypropylene oxide, or a statistical copolymer of the above two oxides alternated, sequenced, or grafted with polyethers.

5. A cell according to claim 4, characterized by the fact that the molecular mass of said polyether lies in the range 300 to 100,000.

6. A cell according to any one of claims 3 to 5, characterized by the fact that the content of said curing compound is selected so that the epoxy-amine ratio lies in the range 0.5 to 5.

7. A cell according to any one of claims 3 to 6, characterized by the fact that said curing compound is of the diglycidyl type.

8. A cell according to any one of claims 3 to 6, characterized by the fact that said curing compound is a polyepoxy resin.

9. A cell according to any one of claims 3 to 6, characterized by the fact that said curing compound is a polyether having two terminal epoxy functions.

10. A cell according to any of claims 4 to 9, characterized by the fact that said film of cross-linked polymer includes a non-reactive plasticizing agent selected from low vapor pressure bipolar aprotic solvents, glymes, glycol dimethyl ethers, and mixtures thereof.
